# EUROPÄISCHE PATENTSCHRIFT

(11) **EP 2 923 071 B1**
(45) Veröffentlichungstag und Bekanntmachung des Hinweises auf die Patenterteilung: **12.12.2018**
(21) Anmeldenummer: 14783604.3
(22) Anmeldetag: 09.10.2014
(51) Int. Cl.: F02M 63/00

(54) **VENTIL**
VALVE
SOUPAPE

(30) Priorität: 15.10.2013 DE 102013220913
(43) Veröffentlichungstag der Anmeldung: 30.09.2015
(73) Patentinhaber: Continental Automotive GmbH, 30165 Hannover (DE)
(72) Erfinder: KRÜGER, Thomas, 98660 Themar (DE); BLEECK, Matthias, 93080 Pentling (DE)
(86) Internationale Anmeldenummer: PCT/EP2014/071687
(87) Internationale Veröffentlichungsnummer: WO 2015/055512

(56) Entgegenhaltungen:
- EP-A2- 2 444 652
- WO-A1-2014/206601
- WO-A1-2014/206764

## Beschreibung

Die Erfindung betrifft ein Ventil, insbesondere ein Ventil für ein Kraftstoffeinspritzsystem für Brennkraftmaschinen von Kraftfahrzeugen.

Ventile in Kraftstoffeinspritzsystemen unterliegen starken Beanspruchungen, da sie beispielsweise Drücken von 2000 bar oder mehr ausgesetzt sind. Bei Ventilen, die elektromagnetische Aktuatoren aufweisen, wird häufig aus magnetischen Gründen ein vergleichsweise weiches Material verwendet. Dieses weiche Material wird durch zusätzliche Bauteile gegen den hohen Druck und Verschleiß geschützt.

WO 2014/206601 A1 und WO 2014/206764 A1 beschreiben jeweils ein Druckregelventil, das ein Gehäuse mit einer Eingangsöffnung und einer Abströmöffnung, einen im Gehäuse geführten Ventilstift mit einem Betätigungselement und ein Dichtelement an einem Ende des Betätigungselements umfasst, das dazu ausgeführt ist, einen Ventilsitz bei Bewegung des Ventilstifts zu verschließen, so dass ein Fluidstrom zwischen der Eingangsöffnung und der Abströmöffnung unterbrochen wird.

EP 2 444 652 A2 offenbart ein Hochdruckregelventil mit einem Ventilkörper mit einem Einlass und einem Auslass, wobei der Auslass durch wenigstens eine radial verlaufende Öffnung in dem Ventilkörper gebildet ist, einem im wesentlichen scheibenförmig ausgebildeten Ventilsitz, der an dem Ventilkörper zwischen Einlass und Auslass angeordnet ist und eine Ventilbohrung aufweist, die Einlass und Auslass verbindet, einem Dichtelement, das an einem Betätigungselement geeignet angeordnet ist, die Ventilbohrung zu verschließen und einer Betätigungseinrichtung, die geeignet ausgebildet ist, das Betätigungselement derart zu bewegen, dass ein Öffnen und Schließen des Ventils bewirkt wird, wobei der Ventilsitz auslassseitig einen sich von einer Grundfläche axial in Richtung der Öffnung erstreckenden umlaufenden Fortsatz aufweist.

Es ist wünschenswert, ein Ventil anzugeben, das einen verlässlichen Betrieb ermöglicht und insbesondere kostengünstig herstellbar ist.

Die Erfindung ist in dem Anspruch 1 definiert.

Das Ventil ist insbesondere als Ventil in einem Kraftstoffeinspritzsystem einer Brennkraftmaschine verwendbar. Beispielsweise wird das Ventil als Druckbegrenzungsventil verwendet. Das Ventil bleibt bis zu einem bestimmten vorgegebenen Druck geschlossen und öffnet oberhalb dieses Drucks, so dass Fluid von dem Fluideinlass durch den Ventilsitzkörper zu dem Fluidauslass gelangen kann. Von dort fließt das Fluid beispielsweise wieder in Richtung eines Fluidtanks.

Das Ventilelement, das die Form eines Stifts oder einer Ventilnadel aufweist, ist insbesondere mit einem elektromagnetischen Aktuator gekoppelt. Der elektromagnetische Aktuator ist eingerichtet, das Ventilelement relativ zu dem Ventilsitzkörper entlang der Längsachse zu bewegen, so dass sich das Ventilelement von dem Dichtsitz entfernt. Der elektromagnetische Aktuator ist mit dem Gehäuse gekoppelt. Das Gehäuse ist aus einem vergleichsweise weichen Material gebildet, insbesondere um einen verlässlichen Betrieb des elektromagnetischen Aktuators zu ermöglichen. Das Gehäuse führt das Fluid auf der Niederdruckseite. Das Gehäuse führt nicht das mit hohem Druck von 2000 bar oder mehr beaufschlagte Fluid.

Der Ventilsitzkörper ist aus einem vergleichsweise härteren Material gebildet als das Gehäuse. Der Ventilsitzkörper umgibt den Fluideinlass, in dem Fluid mit bis zu 2000 bar oder mehr geführt werden kann. Der Ventilsitzkörper ist zudem in Kontakt mit dem Ventilelement, um die Bewegung des Ventilelements zu führen. Somit wird das Ventilelement von dem Ventilsitzkörper geführt, der aus dem härteren Material gebildet ist. Insbesondere weist das Material des Gehäuses einen niedrigeren Härtewert auf als der Ventilsitzkörper. Das Ventilelement wird in dem harten Material geführt, wodurch Führungsverschleiß vermieden wird. Dadurch werden die Genauigkeit und die Verlässlichkeit des Ventils auch über einen längeren Betriebszeitraum erhöht. Zudem sind der Dichtsitz und die Führung in dem gleichen Ventilsitzkörper ausgebildet, so dass weniger Toleranzen auftreten. Dadurch werden die Fertigungsgenauigkeiten erhöht, da die Elemente, deren Lage präzise eingehalten werden muss, auf einer gemeinsamen Achse integriert und angeordnet sind.

Unter einem harten Material versteht man insbesondere ein mechanisch hartes Material, d.h. ein Material, das schwerer zu verformen ist als ein vergleichsweise weicheres Material. Entsprechend versteht man unter einem weicheren Material ein Material, dass sich vergleichsweise leichter verformen lässt als ein vergleichsweise härteres Material. Ein weiches Material ist umfasst insbesondere weich-magnetische Materialien.

Ein härteres Material kann beispielsweise ein martensitischer Stahl sein, insbesondere umfassend die folgenden Elemente: Cr, C, Mn, Si, P, S, und Mo. Dabei kann die Materialzusammensetzung insbesondere wie folgt sein: 16-18 % Cr, 0.6-1.2 % C, ≤ 1 % Mn, ≤ 1 % Si, ≤ 0.04 % P, ≤ 0.03 % S, ≤ 0.75 % Mo. Das härtere Material kann beispielsweise Stahl der SAE Bezeichnung 440 sein. Der härtere Stahl hat beispielsweise die Rockwellhärte C50 oder höher, beispielsweise zwischen C50 und C70, insbesondere zwischen C55 und C66, einschließlich der Eckwerte.

Vorzugsweise ist das weichere Material ein magnetisches Material. Das härtere Material kann ein nichtmagnetisches Material sein.

Insbesondere kann das weichere Material ein ferritischer Stahl sein, insbesondere umfassend die folgenden Elemente: Cr, C, Mn, Si, P, und S, ggf. zusätzlich Ni oder Mo. Dabei kann die Materialzusammensetzung insbesondere wie folgt sein: 16-18 % Cr, ≤ 0.75 % Ni, ≤ 0.12 % C, ≤ 1 % Mn, ≤ 1 % Si, ≤ 0.04 % P und ≤ 0.03 % S. Das weichere Material kann beispielsweise Stahl der SAE Bezeichnung 430 sein. Der weichere Stahl kann beispielsweise die Rockwellhärte B100 oder geringer haben, beispielsweise zwischen B70 und B100, insbesondere zwischen B80 und B90, einschließlich der Eckwerte.

Gemäß weiteren Ausführungsformen ermöglicht die Kopplung zwischen der Führungsfläche und dem Ventilelement ein Eindringen von Fluid entlang des Ventilelements und der Führungsfläche. Die Führung des Ventilelements in dem Ventilsitzkörper ist nicht dichtend.

Gemäß Ausführungsformen weist das Ventilelement entlang der Längsachse zumindest im Bereich der Führungsfläche eine Ausnehmung auf für einen Fluidfluss von dem Fluideinlass zu dem Fluidauslass. Durch die Ausnehmung ist es möglich, Fluid bei geöffnetem Ventil entlang der Längsachse durch den Führungsbereich an der Führungsfläche hindurchzuführen. Die Ausnehmung erstreckt sich in Richtung weg vom Dichtsitz insbesondere über den Dichtsitzkörper hinaus. Dadurch ist eine verlässliche und schnelle Fluidableitung zum Fluidauslass ermöglicht.

Gemäß weiteren Ausführungsformen weist der Ventilsitzkörper eine Fluidleitung auf, die quer zu der Längsachse ausgerichtet ist für einen Fluidfluss von dem Fluideinlass zu dem Fluidauslass. Bei geöffnetem Ventil ist es möglich, dass das Fluid von dem Fluideinlass durch die Fluidleitung zu dem Fluidauslass gelangt. Gemäß Ausführungsformen weist das Ventil entweder die Ausnehmung in dem Ventilelement auf oder die Fluidleitung in dem Ventilsitzkörper, jedoch nicht beides. Gemäß weiteren Ausführungsformen weist das Ventil sowohl die Ausnehmung in dem Ventilelement als auch die Fluidleitung in dem Ventilsitzkörper auf.

Gemäß weiteren Ausführungsformen weist der Ventilsitzkörper einen Fluidraum am Dichtsitz mit einer Wand auf. Ein Flüssigkeitsstrahl trifft auf die Wand, wenn der Fluidfluss von dem Fluideinlass zu dem Fluidauslass freigegeben ist. Beim Öffnen des Ventils bildet sich der scharfe Flüssigkeitsstrahl von der Hochdruckseite zu der Niederdruckseite. Der Strahl trifft auf die Wand des Ventilsitzkörpers aus dem härteren Material. Im Vergleich zu dem weicheren Material unterliegt der Ventilsitzkörper einem geringeren Verschleiß. Zudem kann auf weitere Bauteile zum Schutz gegen den Flüssigkeitsstrahl verzichtet werden. Somit sind eine einfache und kostengünstige Herstellung sowie ein verschleißarmer und verlässlicher Betrieb möglich.

Einige exemplarische Ausführungsbeispiele werden nachstehend mit Bezug auf die Figuren beschrieben. Gleiche, gleichartige oder gleich wirkende Elemente können dabei mit den gleichen Bezugszeichen versehen sein.

Es zeigen:
Figur 1 eine schematische Darstellung eines Ventils gemäß Ausführungsformen,
Figur 2 eine schematische Darstellung eines Ventils gemäß Ausführungsformen, und
Figur 3 einen Querschnitt durch ein Ventilelement gemäß Ausführungsformen.

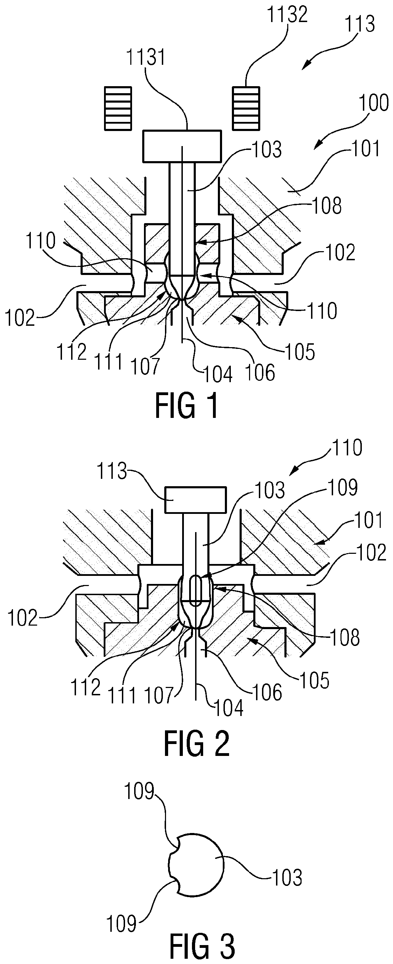

Figur 1 zeigt schematisch ein Ventil 100 in einer Querschnittsansicht. Das Ventil 100 umfasst ein Gehäuse 101 sowie einen Ventilsitzkörper 105. Der Ventilsitzkörper 105 ist mit dem Gehäuse 101 gekoppelt. Der Ventilsitzkörper 105 ist in einer Ausnehmung des Gehäuses 101 angeordnet. Beispielsweise ist das Ventil 100 ein Druckbegrenzungsventil in einem Kraftstoffeinspritzsystem.

Der Ventilsitzkörper 105 umgibt einen Fluideinlass 106. Beispielsweise ist der Fluideinlass 106 mit einer Hochdruck führenden Kraftstoffleitung oder einem Druckspeicher hydraulisch gekoppelt. Auf der Hochdruckseite treten insbesondere Drücke von mehr als 2000 bar auf. Der Ventilsitzkörper 105 weist einen Dichtsitz 107 auf. Der Dichtsitz ist an einem Ende des Fluideinlasses 106 angeordnet. Der Ventilsitzkörper 105 weist an einem den Fluideinlass 106 abgewandten Bereich eine Führungsfläche 108 auf. Die Führungsfläche 108 ist insbesondere zylinderförmig. Der Ventilsitzkörper 105 umgibt zudem einen Fluidraum 111. Der Fluidraum 111 ist zwischen dem Dichtsitz 107 und der Führungsfläche 108 angeordnet. Gemäß Ausführungsformen umgibt der Ventilsitzkörper 105 eine Fluidleitung 110. Die Fluidleitung 110 ist insbesondere eine Bohrung oder mehrere Bohrungen. Die Fluidleitung 110 ist zwischen der Führungsfläche 108 und dem Dichtsitz 107 angeordnet.

Das Gehäuse 101 umgibt einen Fluidauslass 102, der stromabwärts der Fluidleitung 110 angeordnet ist.

Das Ventil 100 weist weiterhin ein Ventilelement 103 auf. Das Ventilelement 103 ist ein länglich ausgedehnter Ventilstift beziehungsweise eine länglich ausgedehnte Ventilnadel, die sich entlang einer Längsachse 104 erstreckt.

Das Ventilelement 103 ist mit dem Ventilsitzkörper 105 gekoppelt. Das Ventilelement 103 ist bereichsweise innerhalb des Ventilsitzkörpers 105 angeordnet. Das Ventilelement 103 ist relativ zu dem Ventilsitzkörper 105 entlang der Längsachse 104 bewegbar. Eine Bewegung des Ventilelements 103 relativ zu dem Ventilsitzkörper 105 wird durch die Führungsfläche 108 geführt. Das Ventilelement 103 ist mit einem Ende im geschlossenen Zustand des Ventils mit dem Dichtsitz 107 in Kontakt. Mit einem gegenüberliegenden Ende ist das Ventilelement 103 mit einem Aktuator 113 gekoppelt. Der Aktuator ist insbesondere ein elektromagnetischer Aktuator. Er umfasst insbesondere eine Magnetspule 1132 und einen Anker 1131. Der Aktuator 113 ist insbesondere an dem Gehäuse 101 befestigt. Der Aktuator 113 ist eingerichtet, das Ventilelement 103 entlang der Längsachse 104 in eine Richtung weg vom Dichtsitz 107 zu bewegen. Insbesondere kann der Anker 1131 bei Bestromen der Magnetspulen 1132 in deren Richtung ausgelenkt werden.

Der Ventilsitzkörper 105 ist aus einem Material, das härter ist, als das Material, aus dem das Gehäuse 101 gebildet ist. Insbesondere besteht der Ventilsitzkörper 105 aus einem härteren Material als das Gehäuse 101. Insbesondere weist der Ventilsitzkörper 105 eine größere Härte auf als das Gehäuse 101. bei der Auswahl des Materials für den Ventilsitzkörper 105 müssen insbesondere keine magnetischen Eigenschaften berücksichtigt werden. Das Material wird vorrangig in Abhängigkeit eines geringen Verschleißes ausgewählt. Das Material des Gehäuses 101 wird in Abhängigkeit seiner magnetische Eigenschaften ausgewählt, da der elektromagnetische Aktuator 113 mit dem Gehäuse 101 gekoppelt ist.

Die Führungsfläche 108 für das Ventilelement 103 ist Teil des Ventilsitzkörpers 105 aus dem härteren Material. An den Ventilsitzkörper 105 tritt nur ein geringer Führungsverschleiß bei der Führung des Ventilelements 103 auf.

Im Betrieb liegt am Fluideinlass 106 Fluid mit einem hohen Druck an. Übersteigt der Druck einen vorgegebenen Wert oder wird der Aktuator betätigt, hebt das Ventilelement 103 von dem Dichtsitz 107 ab. Somit wird ein Fluidfluss von dem Fluideinlass 106 zu dem Fluidauslass 102 freigegeben. Dabei entsteht ein Fluidstrahl zwischen der Spitze des Ventilelements 103 und dem Dichtsitz 107. Dieser Strahl mit einem hohen Druck trifft auf eine Wand 112 des Fluidraums 111. Da der Fluidraum 111 in dem Ventilsitzkörper 105 ausgebildet ist, der aus dem harten Material gebildet ist, tritt nur ein geringer Verschleiß durch das Auftreffen des Strahls auf der Wand 112 auf. Aus dem Fluidraum 111 gelangt das Fluid durch die Fluidleitung 110 zu dem Fluidauslass 102.

Bei dem Ventil 100 sind der Dichtsitz 107 und die Wand 112 in einem einzigen gemeinsamen Bauteil realisiert. Auf weitere Bauteile zum Schutz gegen den Fluidstrahl kann verzichtet werden. Die Führungsfläche 108 und der Ventilsitz 107 sind in einem einzigen gemeinsamen Bauteil realisiert. Somit treten wenige Fertigungstoleranzen auf. Insbesondere sind die Führungsfläche 108, der Dichtsitz 107 und die Wand 112 in einem einzigen gemeinsamen Bauteil realisiert. Dadurch ist eine preiswerte und genaue Fertigung des Ventils 100 möglich. Durch den Verzicht auf zusätzliche Bauteile zum Schutz gegen den hohen Druck ist das Ventil kostengünstig. Das Ventil 100 unterliegt im Fluidraum 111 nur einem geringen Verschleiß bezüglich des Fluidstrahls. Zudem unterliegt der Ventilsitzkörper 105 einem geringen Verschleißt bezüglich der Führung des Ventilelements 103.

Figur 2 zeigt das Ventil 100 gemäß weiteren Ausführungsformen. Das Ventil 100 gemäß Figur 3 entspricht im Wesentlichen den Ausführungsformen wie in Zusammenhang mit Figur 1 erläutert. Im Unterschied zu den Ausführungsformen der Figur 1 weist das Ventil 100 gemäß den Ausführungsbeispielen der Figur 2 keine Fluidleitung 110 auf. Stattdessen ist in dem Ventilelement 103 eine Ausnehmung 109 oder eine Mehrzahl von Ausnehmungen 109 vorgesehen.

Figur 3 zeigt einen Querschnitt quer zur Längsachse 104 des Ventilelements 103 der Figur 2. Die Ausnehmung 109 ist in Richtung der Längsachse 104 seitlich in das Ventilelement 103 eingebracht. Durch die Ausnehmung 109 wird bei geöffnetem Ventil das Fluid von dem Fluidraum 111 zu dem Fluidauslass 102 geführt. Somit kann auf die Bohrungen 110 im Ventilsitzkörper 105 verzichtet werden. Die Ausnehmung 109 erstreckt sich insbesondere auf einer dem Dichtsitz 107 abgewandten Seite über die Führungsfläche 108 hinaus. Dadurch ist ein verlässlicher Fluidfluss durch die Ausnehmung 109 realisiert.

## Patentansprüche

1. Ventil, umfassend:
- ein Gehäuse (101), das einen Fluidauslass (102) umgibt,
- ein als länglich ausgedehnter Ventilstift bzw. als länglich ausgedehnte Ventilnadel ausgebildetes Ventilelement (103) mit einer Längsachse (104),
- einen Ventilsitzkörper (105), der einen Fluideinlass (106) umgibt und der einen Dichtsitz (107) aufweist so, dass das Ventil (100) geschlossen ist, wenn das Ventilelement (103) an dem Dichtsitz (107) anliegt, wobei es im geschlossenen Zustand des Ventils mit einem Ende des Ventilstiftes bzw. der Ventilnadel mit dem Dichtsitz (107) in Kontakt ist, und der mit dem Gehäuse (101) gekoppelt ist, wobei der Ventilsitzkörper (105) in einer Ausnehmung des Gehäuses (101) angeordnet ist, wobei
- das Ventilelement (103) relativ zu dem Ventilsitzkörper (105) in Richtung der Längsachse (104) bewegbar ist, um einen Fluidfluss von dem Fluideinlass (106) zu dem Fluidauslass (102) freizugeben,
- derVentilsitzkörper (105) eine Führungsfläche (108) umgibt mit der das Ventilelement (103) gekoppelt ist, um die Bewegung des Ventilelements (103) zu führen,
- der Ventilsitzkörper (105) aus einem härteren Material gebildet ist als das Gehäuse (101).

2. Ventil nach Anspruch 1, bei dem die Kopplung zwischen der Führungsfläche (108) und dem Ventilelement (103) ausgebildet ist für ein Eindringen des Fluids zwischen die Führungsfläche (108) und das Ventilelement (103).

3. Ventil nach Anspruch 1 oder 2, bei dem das Ventilelement (103) entlang der Längsachse (104) zumindest im Bereich der Führungsfläche (108) eine Ausnehmung (109) aufweist für einen Fluidfluss von dem Fluideinlass (106) zu dem Fluidauslass (102) .

4. Ventil nach einem der Ansprüche 1 bis 3, bei dem der Ventilsitzkörper (105) eine Fluidleitung (110) aufweist, die quer zu der Längsachse (104) ausgerichtet ist für einen Fluidfluss von dem Fluideinlass (106) zu dem Fluidauslass (102).

5. Ventil nach einem der Ansprüche 1 bis 4, bei dem der Ventilsitzkörper (105) einen Fluidraum (111) am Dichtsitz (107) mit einer Wand (112) so umgibt, dass ein Fluidstrahl auf die Wand (112) trifft, wenn der Fluidfluss von dem Fluideinlass (106) zu dem Fluidauslass (102) freigegeben ist.

6. Ventil nach einem der Ansprüche 1 bis 5, umfassend:
- einen elektromagnetischen Aktuator (113), der an dem Gehäuse (101) angeordnet ist und der mit dem Ventilelement (103) gekoppelt ist, um das Ventilelement (103) in Richtung der Längsachse (104) zu bewegen.

## Claims

1. Valve, comprising:
- a housing (101) which surrounds a fluid outlet (102),
- a valve element (103), which is designed as an elongate valve pin or an elongate valve needle, with a longitudinal axis (104),
- a valve seat body (105) which surrounds a fluid inlet (106) and which has a sealing seat (107), such that the valve (100) is closed when the valve element (103) bears against the sealing seat (107), wherein, in the closed state of the valve, said valve element is in contact, by way of one end of the valve pin or the valve needle, with the sealing seat (107), and which is coupled to the housing (101), wherein the valve seat body (105) is arranged in a recess of the hosing (101) wherein
- the valve element (103) is movable relative to the valve seat body (105) in the direction of the longitudinal axis (104) in order to permit a fluid flow from the fluid inlet (106) to the fluid outlet (102),
- the valve seat body (105) surrounds a guide surface (108) to which the valve element (103) is coupled for the guidance of the movement of the valve element (103),
- the valve seat body (105) is formed from a harder material than the housing (101).

2. Valve according to Claim 1, in which the coupling between the guide surface (108) and the valve element (103) is designed for an ingress of the fluid between the guide surface (108) and the valve element (103).

3. Valve according to Claim 1 or 2, in which the valve element (103) has, at least in the region of the guide surface (108) as viewed along the longitudinal axis (104), a recess (109) for a fluid flow from the fluid inlet (106) to the fluid outlet (102).

4. Valve according to one of Claims 1 to 3, in which the valve seat body (105) has a fluid line (110), which is oriented transversely with respect to the longitudinal axis (104), for a fluid flow from the fluid inlet (106) to the fluid outlet (102).

5. Valve according to one of Claims 1 to 4, in which the valve seat body (105) surrounds a fluid chamber (111) at the sealing seat (107) by way of a wall (112) such that a fluid jet strikes the wall (112) when the fluid flow from the fluid inlet (106) to the fluid outlet (102) is permitted.

6. Valve according to one of Claims 1 to 5, comprising:
- an electromagnetic actuator (113) which is arranged on the housing (101) and which is coupled to the valve element (103) in order to move the valve element (103) in the direction of the longitudinal axis (104).

## Revendications

1. Soupape, comprenant:
- un boîtier (101) qui entoure une sortie de fluide (102),
- un élément de soupape (103) réalisé sous la forme d'une goupille de soupape s'étendant longitudinalement ou sous forme de pointeau de soupape s'étendant longitudinalement, avec un axe longitudinal (104),
- un corps de siège de soupape (105) qui entoure une entrée de fluide (106) et qui présente un siège d'étanchéité (107) de telle sorte que la soupape (100) soit fermée lorsque l'élément de soupape (103) s'applique contre le siège d'étanchéité (107), celui-ci étant en contact, dans l'état fermé de la soupape, par une extrémité de la goupille de soupape ou du pointeau de soupape, avec le siège d'étanchéité (107), et lequel étant accouplé au boîtier (101), le corps de siège de soupape (105) étant disposé dans un évidement du boîtier (101),
- l'élément de soupape (103) pouvant être déplacé par rapport au corps de siège de soupape (105) dans la direction de l'axe longitudinal (104) afin de libérer un flux de fluide depuis l'entrée de fluide (106) jusqu'à la sortie de fluide (102),
- le corps de siège de soupape (105) entourant une surface de guidage (108) avec laquelle l'élément de soupape (103) est accouplé afin de guider le déplacement de l'élément de soupape (103),
- le corps de siège de soupape (105) étant formé d'un matériau plus dur que celui du boîtier (101).

2. Soupape selon la revendication 1, dans laquelle l'accouplement entre la surface de guidage (108) et l'élément de soupape (103) est réalisé de manière à permettre la pénétration du fluide entre la surface de guidage (108) et l'élément de soupape (103).

3. Soupape selon la revendication 1 ou 2, dans laquelle l'élément de soupape (103) présente le long de l'axe longitudinal (104) au moins dans la région de la surface de guidage (108) un évidement (109) pour un flux de fluide depuis l'entrée de fluide (106) jusqu'à la sortie de fluide (102).

4. Soupape selon l'une quelconque des revendications 1 à 3, dans laquelle le corps de siège de soupape (105) présente une conduite de fluide (110) qui est orientée transversalement à l'axe longitudinal (104) pour un flux de fluide depuis l'entrée de fluide (106) jusqu'à la sortie de fluide (102).

5. Soupape selon l'une quelconque des revendications 1 à 4, dans laquelle le corps de siège de soupape (105) entoure un espace de fluide (111) au niveau du siège de soupape (107) avec une paroi (112) de telle sorte qu'un jet de fluide parvienne sur la paroi (112) lorsque le flux de fluide provenant de l'entrée de fluide (106) et allant vers la sortie de fluide (102) est libéré.

6. Soupape selon l'une quelconque des revendications 1 à 5, comprenant :
- un actionneur électromagnétique (113) qui est disposé sur le boîtier (101) et qui est accouplé à l'élément de soupape (103) afin de déplacer l'élément de soupape (103) dans la direction de l'axe longitudinal (104).
